# EUROPEAN PATENT APPLICATION

(11) **EP 3 599 607 A1**
(43) Date of publication of application: **29.01.2020**
(21) Application number: 19186822.3
(22) Date of filing: 17.07.2019
(51) Int. Cl.: G11B 27/11

(54) **SYSTEM AND METHOD ALLOWING SIMULTANEOUS VIEWING OF LIVE AND RECORDED VIDEO CONTENT**

(30) Priority: 27.07.2018 US 201862711079 P
(71) Applicant: Briefcam Ltd., Modi'in, Harei Yehuda 7177871 (IL)
(72) Inventor: CASPI, Yaron, 7406518 Ness Ziona (IL)
(74) Representative: Jakelski & Althoff Patentanwälte PartG mbB

(57) **Abstract**

A computer-implemented method for displaying video frames of a current scenario captured by a live video camera together with previously captured objects, is provided. The video frames captured by the video camera are processed to identify objects of a predetermined characteristic, and the identified objects are stored in a storage device. Previously captured objects, retrieved from the storage device, are inserted into currently displayed frames of the live video, so as to display simultaneously the current scenario together with previously captured objects.

## Description

### FIELD OF THE INVENTION

This invention relates to video systems allowing simultaneous viewing of live and recorded video content.

### PRIOR ART

Prior art references considered to be relevant as a background to the invention are listed below and their contents are incorporated herein by reference. Acknowledgement of the references herein is not to be inferred as meaning that these are in any way relevant to the patentability of the invention disclosed herein. Each reference is identified by a number enclosed in square brackets and accordingly the prior art will be referred to throughout the specification by numbers enclosed in square brackets.
[1] US Patent 4,718,104: *The Laplacian pyramid as a compact image code.*
[2] P.J. Burt et al., The Laplacian pyramid as a compact image code, IEEE Transactions on Communications, vol. COM-31, No. 4, 532-540, Apr. 1983.
[3] US Patent 8,102,406: *Method and System for Producing a Video Synopsis.*
[4] C. Stauffer and W.E.L Grimson. Adaptive background mixture models for real-time tracking, CVPR99, Fort Collins, CO, June 1999.
[5] T. Ko, S. Soatto and D. Estrin, Background subtraction on distributions, Proc. ECCV 2008, pp. 276-289.
[6] US Patent No. 8,311,277: *Method and System for Video Indexing and Video Synopsis.*
[7] GB 2 326 049: *Video surveillance system in which live and previously recorded images may be simultaneously displayed*
[8] WO 2010/076268: *Recording and Playback of Digital Media Content*
[9] WO 2006/048875: *Method and System for Spatio-Temporal Video Warping*
[10] J. Long, E. Shelhamer, and T. Darrell, Fully Convolutional Networks for Semantic Segmentation, CVPR 2015, pp. 3431-3440.
[11] M. Ren, and R.S. Zemel, End-To-End Instance Segmentation with Recurrent Attention, CVPR 2017, pp. 6656-6664.
[12] US Patent No. 9,693,023: *Monitoring apparatus, monitoring system, and monitoring method.*

### BACKGROUND OF THE INVENTION

Video monitoring is widely used in surveillance systems. Its main objective is to provide monitoring of activities in the relevant site. Surveillance video can be viewed in ***live*** video, which in the context of the invention as defined by the appended claims means displaying video frames in real time, with negligible delay from the time of recording. Video can also be viewed off-line after it was recorded, in what is called ***playback*** video.

Almost every guard with surveillance cameras will face the following dilemma when an event occurs such as an intruder alarm being triggered. Should he watch the live video to see what the intruder is doing now, or should he watch the playback video in order to see what has the intruder already done? The dilemma of live vs. playback is so prominent that many large monitoring centers, which are operated by trained experienced guards, use multiple video screens: some screens for playback video and some screens for live video. But what can be done when only one screen is available?

This problem is addressed in the art. For example, GB 2 326 049 [7] discloses a video surveillance system in which live and previously recorded images may be simultaneously displayed. The surveillance system comprises a plurality of video cameras, a monitor and a video recorder. The video cameras and monitor are controlled by multiplexers that can display multiple cameras on one monitor and also send the information from several cameras to the video recorder using time division multiplexing (TDM). The recorded images are played back simultaneously with the ongoing monitoring of live images, without interrupting the on-going recording of new images. In such an arrangement, the live and playback videos are displayed in separate dedicated areas of the monitor, each of which is associated with a different time. Thus, while they are displayed simultaneously on the same monitor, they do not form a composite video sequence that shows spatial and temporal progress of an object in a single video sequence.

WO2010076268 [8] discloses a digital video recording and playback apparatus having one or more receivers for receiving media content from one or more sources external to the apparatus. The received media content is stored and combined contemporaneously with live content received by one of the receivers. For example, live topical information can be obtained from an external source or sources such as Internet feeds, transmitted metadata or live topical information and overlaid on programs or inserted between programs.

Such an arrangement allows auxiliary video information to be superimposed or montaged on a live feed as is well-known, for example in TV weather forecasts where the forecaster presents a live feed during which pre-recorded content is displayed. However, there is no suggestion to superimpose on to the live feed, content that was itself part of the live feed but no longer is; or which is part of the current live feed but whose movement is of interest.

US Patent No. 8,102,406 [3] discloses a method and system for producing a video synopsis which transform a first sequence of video frames of a first dynamic scene to a second sequence of at least two video frames depicting a second dynamic scene. A subset of video frames in the first sequence is obtained that show movement of at least one object having a plurality of pixels located at respective *x*, *y* coordinates and portions from the subset are selected that show non-spatially overlapping appearances of the at least one object in the first dynamic scene. The portions are copied from at least three different input frames to at least two successive frames of the second sequence without changing the respective *x*, *y* coordinates of the pixels in the object and such that at least one of the frames of the second sequence contains at least two portions that appear at different frames in the first sequence.

The output of this approach is a composite video sequence whose frames include dynamic objects whose movement is depicted in the output video sequence. Object that appeared at different times in the input video will be shown simultaneously in the output video. The objects will be superimposed over a background taken from the input sequence.

WO2006/048875 [9] discloses a method and system for manipulating temporal flow in a video. A first sequence of video frames of a first dynamic scene is transformed to a second sequence of video frames depicting a second dynamic scene such that in one aspect, for at least one feature in the first dynamic scene respective portions of the first sequence of video frames are sampled at a different rate than surrounding portions of the first sequence of video frames; and the sampled portions are copied to a corresponding frame of the second sequence. This allows the temporal synchrony of features in a dynamic scene to be changed.

Reference is also made to C. Stauffer and W.E.L Grimson [4], which discusses a video processing method to distinguish between dynamic objects that move relative to a static background. Each pixel is modeled as a mixture of Gaussians and an on-line approximation is used to update the model. The Gaussian distributions of the adaptive mixture model are then evaluated to determine which are most likely to result from a background process. The dynamic objects are extracted by subtracting the background.

T. Ko, S. Soatto, D. Estrin [5] also uses background subtraction for distinguishing between dynamic objects that move relative to a static background.

Background subtraction is very efficient in detecting and segmenting moving objects. More recently, methods based on Neural Networks were suggested for object segmentation [10, 11]. These methods can accurately segment objects from a single image or a single frame, and also identify the object class. Since only a single image is used, these objects can be either moving or stationary.

### SUMMARY OF THE INVENTION

It is an object of the invention to provide a video-processing method and system, which superimpose playback objects, corresponding to the image appearance of previously appearing objects, on to a live video sequence. The live video is captured substantially in real time and itself may include both static and dynamic objects.

This object is achieved in accordance with the invention by combining visual information from live video feed with playback objects. This is done by selecting objects extracted from earlier times of the video, and combining them with the live video feed. This results in a single combined video that displays objects that appeared in the past together with live video.

Thus in accordance with an embodiment of the invention there is provided a computer-implemented method for displaying live video frames of a current scenario captured by a video camera together with playback of previously captured objects, the method comprising:
**(a)** processing the video frames to identify objects of a predetermined characteristic;
**(b)** storing the identified objects in a storage device; and
**(c)** inserting previously captured objects from the storage device into currently displayed frames of the video so as to display simultaneously the current scenario together with previously captured objects.

One possible application of such a method is a video surveillance system, where a video camera captures a current scene for displaying live feed on a monitor. In the event of a security event triggered, for example, by an intrusion, previously captured objects are inserted into the live feed so as to allow progress of the captured objects to be displayed without interfering with the ongoing video capture and display of the current scene.

In such an application, the previously captured objects of predetermined characteristic are typically moving and are preferably inserted into the current video frame at the same locations from which they are extracted from the previously captured frames. However, objects of different characteristics may be identified. For example, the invention may be used to track a stationary vehicle found at a crime scene, in which case there will be many frames where the vehicle is motionless. Optionally, the respective times associated with the captured objects are displayed either alongside the objects or when selected e.g. using a computer mouse or other pointing device so that the progress of such objects can be clearly viewed in correct spatial orientation within the current scene.

For the sake of clarity and abundant caution, we use the term "live" and "real time" to denote video images that are captured continuously. In any video system where video frames are captured and buffered prior to being displayed, there is always a small and negligible delay between video capture and its subsequent display. In the present invention, the live video frames are buffered and at least some frames are processed in order to stitch playback objects. This need not impose a significant delay since the video frames are also continually processed to identify and store predetermined objects that may be subsequently extracted and stitched into a buffered live frame prior to its being displayed. Indeed, with currently available computing power, objects can be identified in the same interval that a frame is displayed in real time and the thus identified objects can be stored for subsequent playback. Furthermore, if the computation speed is sufficiently high, for example the process of object extraction is 60 times faster than the video frame rate (i.e., 60 min of video can be processed in 1 minute) it is possible to apply the processing of past video in parallel with the triggering effect, with minimal latency.

This clarification is also pertinent in distinguishing the invention over known video synopsis such as described in [3] and [6] and since many of the computational techniques employed in video synopsis may be used in the present invention, it is appropriate to emphasize where the two approaches differ.

Video synopsis [3, 6] processes stored video frames, identifies dynamic objects and creates a new output video at least some of whose frames contain multiple instances of selected dynamic objects each taken from different frames of the input video and therefore captured at different times. The output video thus shows motion of objects that occurred in the past as does the present invention. But the output frames of the video synopsis do not, or at least need not, include any other meaningful features since their only purpose is to show the progress through space and time of objects that typically appeared in the past. As opposed to this, while the present invention in one aspect, also seeks to display moving objects that appeared in the past, the output video of the present invention must continue to show objects that are currently being captured.

It is important to note that while an important application of the invention relates to surveillance this is not its only application and the invention may find general application wherever the historical appearance of an object in a live stream is to be shown in real time as part of the live video. One such example could be a nature program that shows a snake hiding in the sand with its camouflaged eyes slightly protruding awaiting prey. The live feed might show an unsuspecting lizard that passes by and in response to which the snake jumps into visibility and devours the lizard. The narrator may want to display this amazing feat together with historic progress of the snake so as to show on the live feed where, for example, the location of the snake's head was in previous frames prior to its suddenly emerging from the sand.

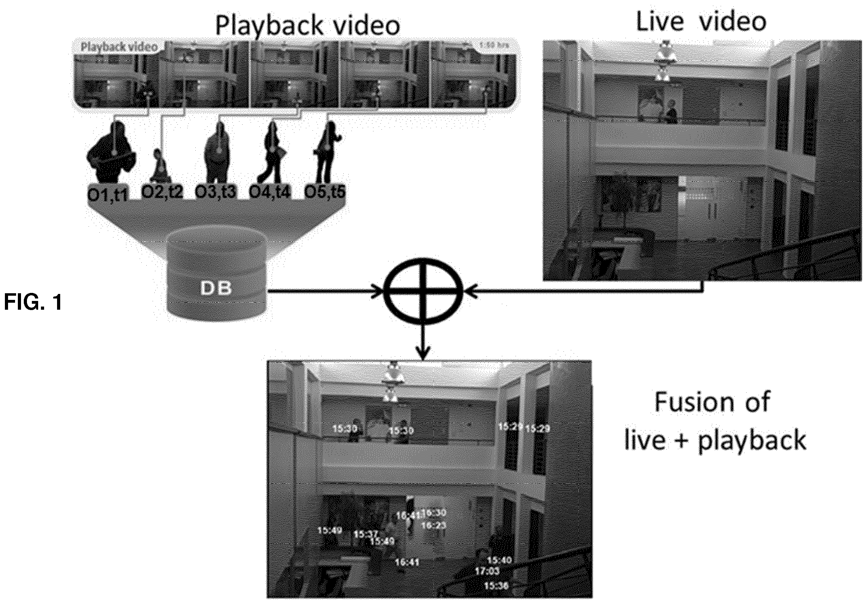

The invention is best summarized with reference to Fig. 1, which is a pictorial representation of a composite output video at least some frames of which simultaneously show live and playback events. The figure shows that objects are extracted from previous frames of the video (playback video) and stored in a database preferably with corresponding time-stamps. Thus, by way of example, it is seen that five objects are extracted and stored in the database, these being denoted by O1, O2 ... O5 and having respective time-stamps t1, t2 ... t5. The live video shows an instantaneous image as seen by the surveillance camera. Following some trigger, the system is able to retrieve playback objects, being objects that were extracted from previous frames of the video, and stitch their images into frames of the live video. It also possible to associate with each playback object is its respective time-stamp, which may be shown in the output video or may be shown in response to a user action, such as pointing to an object with a computer mouse or other graphical selection device. In the figure the time-stamps are shown using a 24-hour clock and, as explained below, can represent absolute times or elapsed times measured from a nominal baseline. The identities of the objects O1, O2 ... O5 are not shown alongside the playback objects in the playback video as depicted in Fig. 1 in order not to unduly obscure the picture. Instead, they can be displayed when pointed to by the user. However, this is an optional feature since either or both object identities and associated times may be hidden or visible by default. The resulting video being a fusion of the live scene and superimposed or fused playback objects shows the output appearing on the guard's monitor. Such an approach allows the user to identify the objects and to determine their progress at a glance while still observing the current scene.

In a preferred embodiment, playback objects (objects extracted from the playback video) should be positioned inside the live video while minimally obscuring the objects of the live video. This may be done by detecting the initial appearance of live objects, predicting their possible future path, and avoiding or minimizing the overlap between inserted playback objects and the predicted future path of objects in the live video. One possibility for the prediction of the path of live objects is to collect statistics about the path taken by objects that appeared earlier, and selecting for each live objects an historic object that was at a similar location with similar properties as the live object (e.g. speed, appearance, etc.). The path taken by that historical object can be used to estimate the future path of the live object. Once a predicted path exists for a live object, the playback object can be placed in the time minimizing the overlap between the inserted playback object and the predicted paths of the live objects. Methods for such placement are described in the video synopsis patents [3, 6].

There may be instances where the position of an inserted previously captured object (playback object) is the same or significantly overlaps an object in the current (live) video. There may be cases where this is acceptable, but if not, the transparency of one or both objects can be adjusted so as to allow simultaneous viewing of both objects. Alternatively, one of the objects can be displayed in monochrome or even as an icon without obscuring the other.

The invention is distinguished over hitherto-proposed systems where live and playback segments are displayed on separate screens or in independent areas of the same screen in the following respects. Both the live and playback videos observe the same scene and playback objects are placed in the output video at the same scene locations they originally appeared. In a preferred embodiment, the live video frames are played as the background, even before objects are extracted from them and inserted into this background. In order to prevent collision/overlap between live and playback objects, even without object extraction on the live video, we can detect the location of live objects in a couple of frames, and estimate their future trajectory based on objects that appeared previously in the scene.

We can distinguish between live objects and playback objects in several ways, two possibilities being: (i) keep the live in color, and turn the playback to monochrome; (ii) display a time stamp in association with the playback objects. But many other methods to distinguish live from playback objects are possible.

Playback objects can have many flavors: (i) video synopsis of a predefined past, say video synopsis of the last 1 hour; (ii) the video is played backward in time starting from the time we activate the display. In this case, the live objects will move forward, while the playback objects will move backwards. (iii) Any other selection of objects from the past.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1** is a pictorial representation of a composite output video at least some frames of which simultaneously show live and playback events;
**Fig. 2** is a block diagram showing functionality and workflow of the main components in a system according to the invention;
**Fig. 3** is a block diagram showing functionality and workflow when object extraction on the live video is either not preferred or not feasible;
**Fig. 4** is a block diagram showing functionality and workflow for preferred object positioning;
**Fig. 5** is a block diagram showing functionality and workflow for efficient retrieval of playback objects;
**Fig. 6** is a block diagram showing functionality and workflow for efficient playback video retrieval with motion detection;
**Fig. 7** is a block diagram showing functionality and workflow for indexing using visualization of extracted objects as an index to archived video;
**Fig. 8** is a block diagram showing functionality and workflow for display of the output video sequence on a remote device;
**Fig. 9** is a block diagram showing functionality and workflow for adding auxiliary time marker and indicator for enhanced interpretation of fused video; and
**Fig. 10** is a block diagram showing functionality and workflow for deploying compressed video.

### DETAILED DESCRIPTION OF EMBODIMENTS

By way of example consider the following scenario: in a monitored facility with many corridors, rooms, and cameras, some of the rooms have limited access. An intruder enters a restricted zone through a door monitored by a surveillance camera, and vanishes quickly in one of the inside rooms without being observed by the guard. Following an intruder alarm the guard faces two tasks: (1) provide to other guards the description of the intruder, and (2) check when the intruder leaves the restricted zone, i.e., exits via the same door. The first task requires watching playback video, while the second requires watching live video.

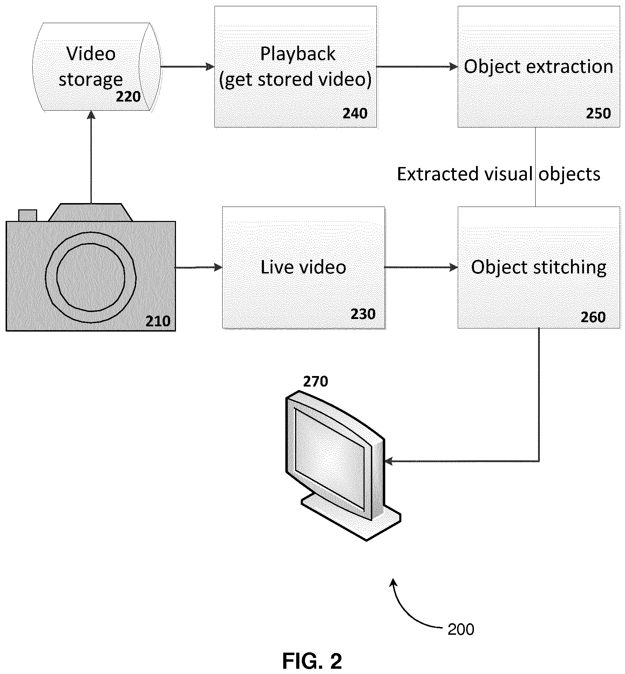

Fig. 2 is a block diagram showing functionality and workflow of the main components in a system 200 according to one embodiment of the invention. A video camera 210 captures video of a scene, which may be displayed in real time as a live video stream 230. The video camera is coupled to a storage device 220, in which the captured video is stored. The storage device can be accessed by a playback module 240 which feeds stored video to an object extraction module 250 that can extract video objects from any specified time period. One possible method for extraction of video objects uses a background subtraction algorithm, but other objects extraction methods are possible as mentioned earlier. Object extraction can also use other importance indicators such as face detection algorithms. The processing module creates a sequence of descriptors for moving objects. Preferably, the descriptors include the contour of the object in each frame it appears. This helps to minimize the area that such object will cover in the output video. Alternatively the descriptors can include a bounding box around the object in each frame. A stitching module 260 can access the extracted objects and blend them into the live video stream 230. that is obtained directly from the camera.

The stitching process performed by the stitching module 260 can be implemented in various ways. An object can be placed into the live video as is, replacing the pixel values at the respective location in the live video. Other methods for seamless blending can be used such as alpha blending, pyramid blending [1, 2], gradient domain blending, etc. The resulting video stream is displayed on a monitor 270 contains information both from the current live video and objects from the past that appeared in the recorded video. As in video synopsis [3, 6], events that occurred at different times are presented simultaneously.

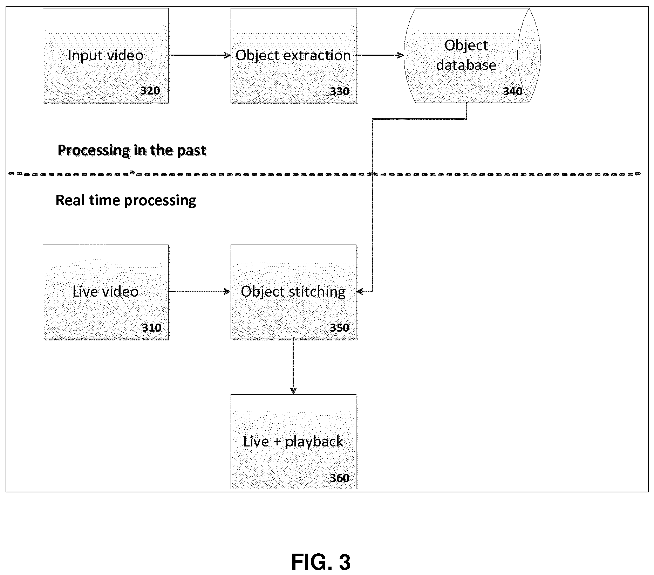

Fig. 3 displays the main components in an embodiment when object extraction 330 is continually performed on received video 320. In this embodiment objects are stored in a database 340 or any other storage from which they can later be retrieved. The object stitching 350 is applied at display time, when the live video 310 is blended with objects retrieved from the object database 340. The final result is a fusion of objects from the past with live video. It should be noted that the input video 320 can be identical to the live video 310, or can be a delayed version of that video. In other words, when the processing speed is sufficiently fast, objects can be extracted on-the-fly from the live video, which thus functions as the input video; although this does not militate against storing the live video and extracting objects off-line at a later time.

There are important differences between the embodiments depicted in Figs 2 and 3. In Fig. 2 the video is stored and object extraction is performed off-line when required from the stored video, while in Fig. 3 object extraction is carried out substantially in real time and only the objects need be stored together with their respective time-stamps. Time-stamps need not be discretely stored in the embodiment of Fig. 2 since the time associated with subsequently extracted objects is an inherent property of the video frame from which the object is extracted. In Fig. 3 there is no need to store the complete video although there are occasions where this is desirable, as explained below, so as to allow video indexing and other enhancements.

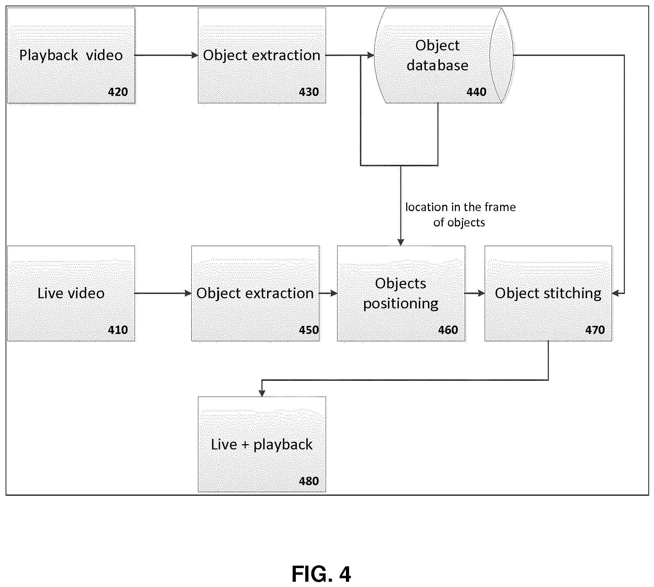

Fig. 4 is a block diagram showing functionality and workflow for preferred object positioning. Based on object location extracted both from the live video 450 and the playback objects stored in the database 440, a dedicated processing mechanism 460 defines the time when each playback object is added. In some embodiments, this computation attempts to minimize the overlap between live objects and playback objects. To this end, the playing time of objects from the database 440 or objects extracted directly 430 is determined so as to minimize conflicts with visualization of objects displayed in live video 410. In other words, objects are placed in the output video at a spatial location corresponding to where they were when extracted from an earlier frame, while the time of the earlier frame from which the object was extracted defines the time associated with the extracted object. Clearly, since the object may be moving between frames, the spatial location in each frame will vary slightly and the algorithm selects those frames (times) where the spatial location of the inserted object does not overlay an object in the live video. In this way the visual results displayed in the fused video 480 combines information from live video 410 and playback video 420 with minimal overlap between objects. In some embodiments, the processing mechanism 460 exploits higher level of semantics which defines importance to objects or pixels. For example, one can define that faces have higher importance, and should be displayed in preference, e.g. occlude other objects and/or will be displayed immediately. As in the previous figure, the video 420 can be identical to the live video 410, or can be a delayed version of it.

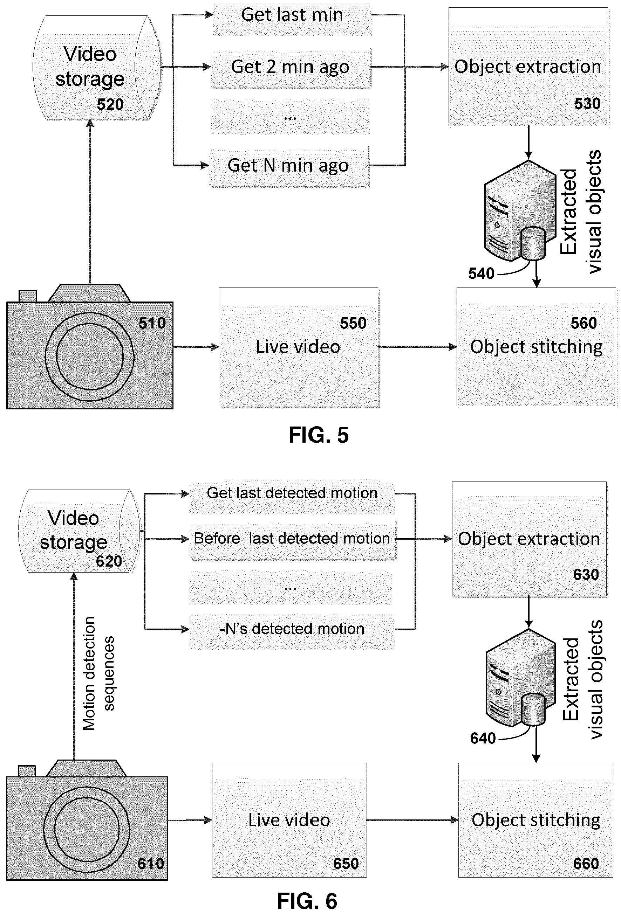

Fig. 5 is a block diagram showing functionality and workflow for efficient playback video retrieval with motion detection. This addresses the need when fusing live video and very recent objects, and to insert objects in reverse chronological order of their appearance. In one embodiment, objects extraction 530 is executed on video retrieved from video storage 520 in reverse order first from last minute, then a minute before and so on. In this mode, extracted objects are fused immediately 530 on live video 550 obtained directly from the sensor/camera 510. The same concept applies when video is stored only in the presence of motion, as illustrated in Fig. 6. The video storage 620 contains only video sequences that contain motion. Thus object extraction 630 applies on motion sequences. The stitching 620 applies as before to live video 650 obtained from sensor/camera 610. An alternative embodiment to this figure is to have previously extracted objects in database 540 and 640, and retrieve the objects from database in reverse chronological order.

Note that in both cases with and without motion detection, the extracted objects are preferably displayed in their original motion i.e. direction in contrast to regular backward video playback, where object motion is the reverse of the original motion. For example, if a captured video contains a person walking from left to right, the present invention may likewise display his walk from left to right as well, even when going back in time.

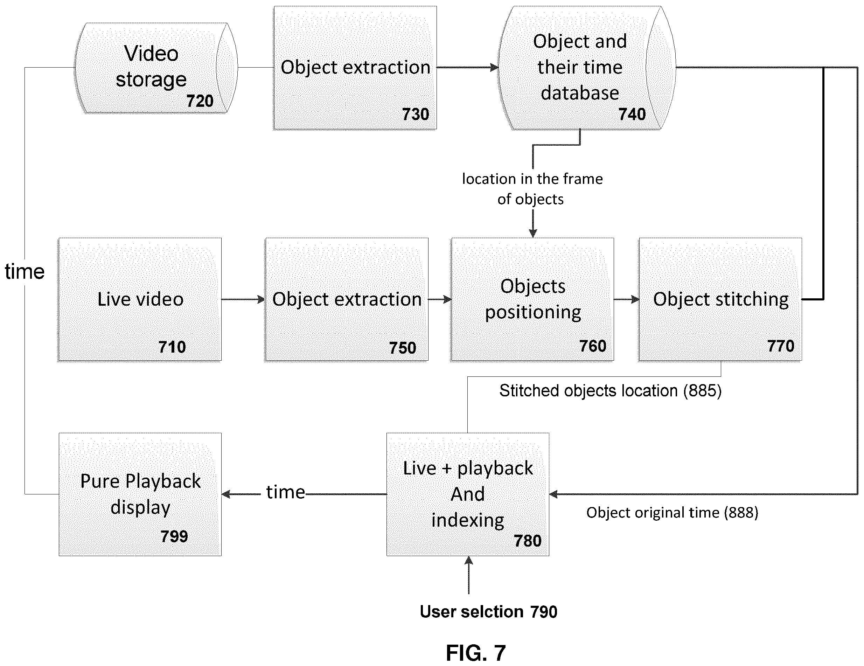

Fig. 7 is a block diagram showing functionality and workflow for indexing using visualization of extracted objects as an index to archived video. One possible usage of the fused video stream 780 generated by object stitching 770 that combines extracted objects 740 with live video 750 from camera 710 after proper positioning 760 is that it can be used as index to the archived video in the video storage 720. This is implemented by sending to the display device 780 also information on each frame containing stitched objects 785 and the original time for each object corresponding to the time, and therefore the video frame, when the object first appeared. Now when the end user selects a given object using a selection device 790 such as a mouse, a touch screen, or even using voice recognition, a request is sent to display the original video 799 from the archive video 720.

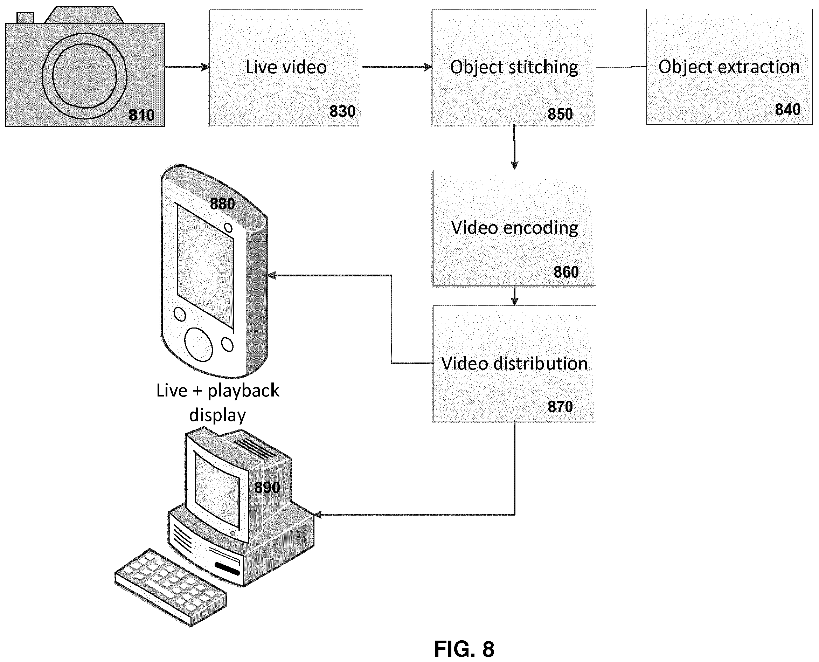

The workflows depicted in the figures are not limited to display on a local device. Thus, Fig. 8 is a block diagram showing functionality and workflow for display of the output video sequence on a remote device. The stitching 850 of objects 840 and live video 830 from camera 810 can be encoded /compressed and distributed 870 to one or more visualization devices such as: cell phone, PDA 980, PC 990, or on any device through the Internet, GSM or any other communication means.

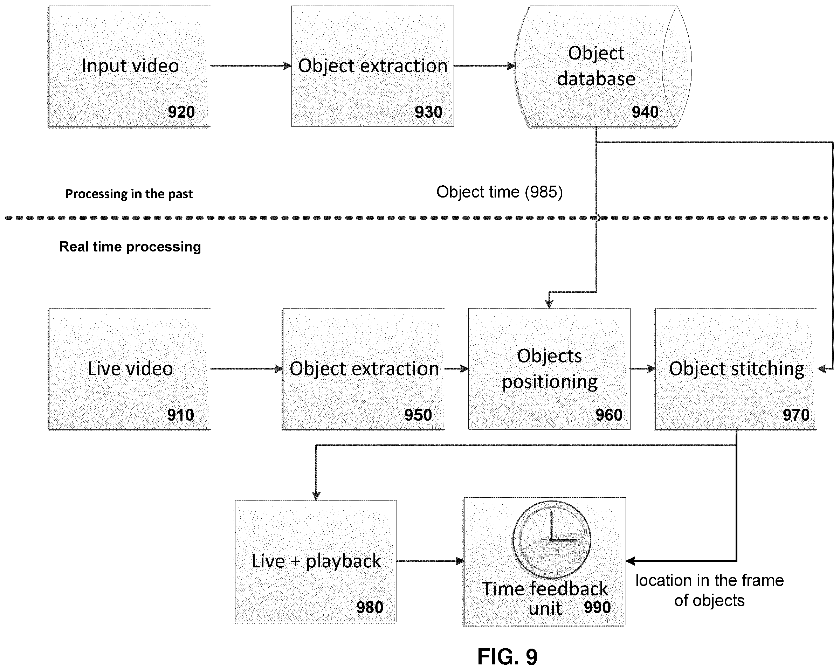

Fig. 9 is a block diagram showing functionality and workflow for adding an auxiliary time marker and indicator for enhanced interpretation of fused video. When viewing fused live video 910 and past video 920 it may be desirable to differentiate between objects 950 extracted from live video 910 and those objects 930 extracted from past video and stored in the object database 940. This can be done in many ways. For example, provision can be made to allow hiding of one type or other interactively, or by displaying respective markers of different types for live and playback objects, or by marking just playback objects.

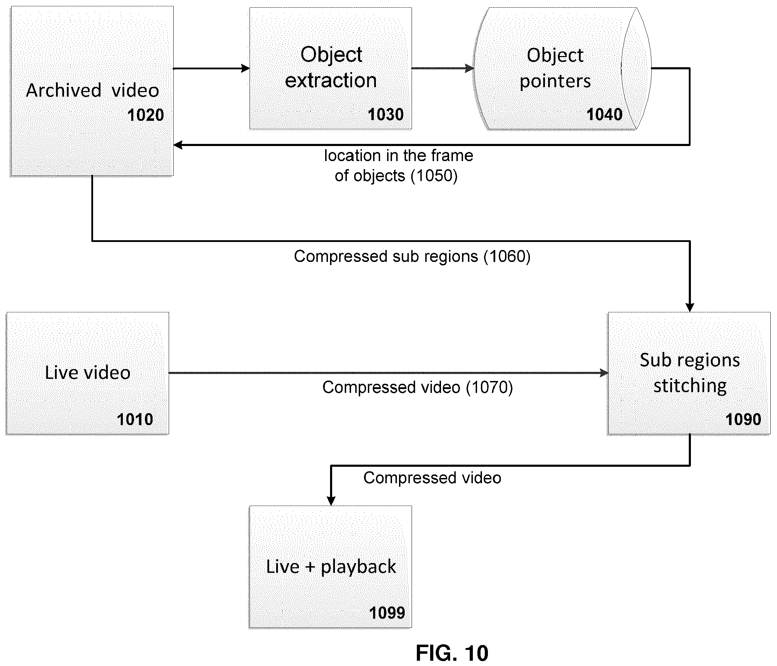

As best seen in Fig. 1, time markers are added that display the object's original time in the video frames next to the object 985. This can be done in the live and in fused display 980 next to an object or on a dedicated time feedback device 990 that like a clock indicates the time of a given object or several objects from the past. Note that an absolute 12/24 hour time frame is not mandatory, and time feedback can be represented as relative time to the present time. Namely "-5" can indicate that a given event occurred 5 minutes ago. Fig. 10 is a block diagram showing functionality and workflow for deploying compressed video. Because of the huge differences in required bandwidth between compressed (sometimes called encoded) video and uncompressed video (sometimes called raw video) many applications prefer to use compressed video. Fig. 10 emphasizes that all operations in the present invention can be deployed on compressed video, starting from object extraction 1030 to object stitching 1090. Note that in this case instead of storing playback objects, the object database 1040 can store pointers to a respective location in the archive database 1020 that stores a particular frame 1050 or sub region in a frame, and compressed frames or sub regions 1060 of only these frames or sub regions 1050 need be sent to the object stitching unit 1060 together with compressed live video 1070.

Since block replacement suffices to stitch objects in the compressed domain, there is no need to re-compress the resulting video and the compressed output video can be sent to the display device 1099.

It will be appreciated that modifications may be made without departing from the invention as claimed. Specifically, the invention is not limited to intrusion detection or use by guards, but can be applied whenever it is desired to understand quickly what happened. This is a desired functionality in any situation awareness system. The description of the above embodiments is not intended to be limiting, the scope of protection being provided only by the appended claims.

It will also be understood that the system according to the invention may be a suitably programmed computer. Likewise, the invention contemplates a computer program being readable by a computer for executing the method of the invention. The invention further contemplates a machine-readable memory tangibly embodying a program of instructions executable by the machine for executing the method of the invention.

It should also be noted that features that are described with reference to one or more embodiments are described by way of example rather than by way of limitation to those embodiments. Thus, unless stated otherwise or unless particular combinations are clearly inadmissible, optional features that are described with reference to only some embodiments are assumed to be likewise applicable to all other embodiments also.

Without derogating from the above generalizations, the inventive concepts encompassed by the invention include the following:
Inventive concept 1: A computer-implemented method for displaying live video frames of a current scenario captured by a video camera together with playback of previously captured objects, the method comprising:
   **(a)** processing video frames captured by the video camera to identify objects of a predetermined characteristic
   **(b)** storing the identified objects in a storage device; and
   **(c)** inserting previously captured objects from the storage device into currently displayed frames of the live video so as to display simultaneously the current scenario together with previously captured objects.
Inventive concept 2: The method according to inventive concept 1, wherein the objects of a predetermined characteristic are moving objects.
Inventive concept 3: The method according to inventive concept 1 or 2, wherein the inserted objects are placed in the live video at the same locations where they appeared in the original video.
Inventive concept 4: The method according to any one of the preceding inventive concepts, wherein the inserted objects include at least two objects each captured at different respective times.
Inventive concept 5: The method according to any one of the preceding inventive concepts, including inserting in frames of the output video data indicative of a respective time when each instance of the respective inserted object was captured.
Inventive concept 6: The method according to the preceding inventive concepts, including displaying the respective times associated with the captured objects alongside the objects or when selected using a graphical selection device so that progress of the objects can be clearly viewed in correct spatial orientation within the current scene.
Inventive concept 7: The method according to any one of the preceding inventive concepts, wherein at least one of the inserted objects no longer appears in the live video frames of the current scenario.
Inventive concept 8: The method according to any one of the preceding inventive concepts, wherein video frames of the current scenario contain at least one live object in addition to the inserted objects.
Inventive concept 9: The method according to any one of the preceding inventive concepts including visually differentiating between live objects and inserted objects.
Inventive concept 10: The method according to any one of the preceding inventive concepts, wherein the previously captured objects are inserted into currently displayed frames of the live video while minimizing obscuring moving live objects of the live video.
Inventive concept 11: The method according to inventive concept 10, wherein minimizing obscuring moving live objects includes detecting an initial appearance of live objects, predicting their possible future path, and avoiding or minimizing overlap between inserted playback objects and the predicted future path of objects in the live video.
Inventive concept 12: The method according to any one of the preceding inventive concepts, including minimizing for all pixels covered by the inserted object a respective sum of the likelihood that each pixel overlaps with another dynamic object in the live scene.
Inventive concept 13: The method according to any one of the preceding inventive concepts, including assigning an importance metric to objects or pixels and displaying objects having pixels of higher importance in preference to objects having pixels of lower importance.
Inventive concept 14: The method according to any one of the preceding inventive concepts, including positioning playback objects in the live video without exact object detection in the live video.
Inventive concept 15: The method according to any one of the preceding inventive concepts, wherein the moving objects are identified in the same interval that a frame is displayed in real time and are stored for subsequent playback.
Inventive concept 16: The method according to any one of the preceding inventive concepts, wherein the live video frames are stored as an archived video for subsequent processing to identify moving objects.
Inventive concept 17: The method according to inventive concept 16, including using a selected playback object to index the archived video and determine a video frame in the archived video where the selected playback object first appeared.
Inventive concept 18: The method according to any one of the preceding inventive concepts, wherein the position of a previously captured object is identical or significantly overlaps an object in the current scene and one of the objects is either displayed as an icon or a respective transparency of the object is adjusted so as to allow simultaneous viewing of both objects.
Inventive concept 19: The method according to any one of the preceding inventive concepts, wherein the video frames are retrieved from storage in reverse temporal order starting with most recent and progressing to increasingly less recent and are fused immediately on live video as it is captured in real time.
Inventive concept 20: The method according to any one of any one of inventive concepts 1 to 19, including displaying identified moving objects in their original motion.
Inventive concept 21: A computer program product comprising computer-readable memory storing program code which when run on at least one processor executes the method according to any one of the preceding inventive concepts.

## Claims

1. A computer-implemented method for displaying live video frames of a current scenario captured by a video camera together with playback of previously captured objects, the method comprising:
**(a)** processing video frames captured by the video camera to identify objects of a predetermined characteristic;
**(b)** storing the identified objects in a storage device; and
**(c)** inserting previously captured objects from the storage device into currently displayed frames of the live video so as to display simultaneously the current scenario together with previously captured objects.

2. The method according to claim 1, wherein the objects of a predetermined characteristic are moving objects.

3. The method according to claim 1 or 2, wherein the inserted objects are placed in the live video at the same locations where they appeared in the original video.

4. The method according to any one of claims 1 to 3, wherein the inserted objects include at least two objects each captured at different respective times.

5. The method according to any one of claims 1 to 3, including inserting in frames of the output video data indicative of a respective time when each instance of the respective inserted object was captured and optionally displaying the respective times associated with the captured objects alongside the objects or when selected using a graphical selection device so that progress of the objects can be clearly viewed in correct spatial orientation within the current scene.

6. The method according to any one of the preceding claims, including visually differentiating between live objects and inserted objects.

7. The method according to any one of the preceding claims, wherein the previously captured objects are inserted into currently displayed frames of the live video while minimizing obscuring moving live objects of the live video.

8. The method according to claim 7, wherein minimizing obscuring moving live objects includes detecting an initial appearance of live objects, predicting their possible future path, and avoiding or minimizing overlap between inserted playback objects and the predicted future path of objects in the live video.

9. The method according to claim 7, including minimizing for all pixels covered by the inserted object a respective sum of the likelihood that each pixel overlaps with another dynamic object in the live scene.

10. The method according to any one of claims 1 to 9, including assigning an importance metric to objects or pixels and displaying objects having pixels of higher importance in preference to objects having pixels of lower importance.

11. The method according to any one of claims 1 to 10, wherein the moving objects are identified in the same interval that a frame is displayed in real time and are stored for subsequent playback.

12. The method according to any one of claims 1 to 10, including storing the live video frames as an archived video for subsequent processing to identify moving objects and optionally using a selected playback object to index the archived video and determine a video frame in the archived video where the selected playback object first appeared.

13. The method according to any one of claims 1 to 12, wherein the position of a previously captured object is identical or significantly overlaps an object in the current scene and one of the objects is either displayed as an icon or a respective transparency of the object is adjusted so as to allow simultaneous viewing of both objects.

14. The method according to any one of claims 1 to 13, wherein the video frames are retrieved from storage in reverse temporal order starting with most recent and progressing to increasingly less recent and are fused immediately on live video as it is captured in real time.

15. A computer program product comprising computer-readable memory storing program code which when run on at least one processor executes the method according to any one of claims 1 to 14.
